# EUROPEAN PATENT SPECIFICATION

(11) **EP 2 499 708 B1**
(45) Date of publication and mention of the grant of the patent: **06.01.2016**
(21) Application number: 10830124.3
(22) Date of filing: 28.10.2010
(51) Int. Cl.: H01R 13/187, H01R 13/11

(54) **CONNECTOR TERMINAL**
STECKERKLEMME
BORNE DE CONNECTEUR

(30) Priority: 11.11.2009 KR 20090108574
(43) Date of publication of application: 19.09.2012
(73) Proprietor: Tyco Electronics AMP Korea Ltd., Kyungsan-si, Kyungsangbukdo 712-83 (KR)
(72) Inventor: LEE, Chul Sub, Daegu 706-170 (KR); KIM, Jin Kwang, Gyeongsangbuk-do, 712-783 (KR)
(74) Representative: Johnstone, Douglas Ian
(86) International application number: PCT/KR2010/007450
(87) International publication number: WO 2011/059191

(56) References cited:
- EP-A1- 1 420 481
- EP-A2- 1 122 832
- DE-A1-102005 033 696
- JP-A- 5 326 109
- KR-A- 20080 024 614
- US-A- 4 685 886
- US-A- 5 160 279
- US-A1- 2007 202 744

## Description

### Technical Field

The present invention relates to a connector terminal wherein contact is achieved between each coupling terminal part of a coupling terminal unit and a connection terminal unit and between each coupling terminal part of the coupling terminal unit and a connection body terminal unit at two or more contact points, respectively, to disperse heat generated during electrical connection between the coupling terminal unit and the connection terminal unit and between the coupling terminal unit and the connection body terminal unit.

### Background Art

A hybrid car uses two or more power sources. Generally, the hybrid car uses an engine and an electric motor.

In the hybrid car, the engine is normally used in the suburbs or areas where the hybrid car can be driven at a high speed, and the electric motor, which is efficient, is used in heavy traffic or when driving at low speed for whatever reason. At a stop, the combustion engine does not freely idle, but is instead used to charge a battery. For this reason, the hybrid car exhibits high fuel economy, thereby providing high energy efficiency, in turn reducing consumption of fossil fuels. Consequently, the hybrid car is in the spotlight as an environment-friendly car in terms of the reduction of energy consumption and environmental protection.

Since the hybrid car is driven by the electric motor as described above, the hybrid car is provided with a plurality of electrical devices. For this reason, electric connectors are frequently used to connect a plurality of electric wires of the electrical devices.

One of the electric connectors has a plurality of electric terminals connected to the electric wires, and a corresponding one of the electric connectors has a plurality of electric terminals connected to the electric wires. Consequently, electrical connection between the electric terminals of the electric connectors is achieved upon coupling between the electric terminals of the electric connectors. That is, a contact point is formed between a coupling terminal of a connector and a corresponding connection terminal of another connector to achieve electrical connection between the connectors.

If high electric current is applied to the terminals, however, the electric current flows through a single contact point when the coupling terminal and the connection terminal are electrically connected to each other through the contact point, with the result that an amount of heat generated from the contact point is increased. If a large amount of heat is generated from the contact point, spark may occur from the contact point, which may result in an explosion. A prior art electrical connector (on which the preamble of claim 1 is based) is disclosed in patent DE 102005033696 A1.

The connector includes a first member which is adapted to be crimped onto a wire at a first end and inserted into a coupling unit at an opposite second end. The coupling unit includes zig-zag contact portions which are positioned inside the second end of the first member and configured to engage a terminal inserted into the connector.

### Disclosure of Invention

### Technical Problem

Therefore, the present invention has been made in view of the above problems, and it is an object of the present invention to provide a connection terminal wherein contact is achieved between each coupling terminal part of a coupling terminal unit and a connection terminal unit at two or more contact points.

It is another object of the present invention to provide a connection terminal wherein contact is achieved between each coupling terminal part of a coupling terminal unit and a connection terminal unit, which is inserted into the coupling terminal unit, at two or more contact points, and contact is achieved between each coupling terminal part of the coupling terminal unit and a connection body terminal unit, which is fitted onto the coupling terminal unit, at two or more contact points.

It is another object of the present invention to provide a connection terminal wherein contact points of each coupling terminal part of the coupling terminal unit, at which the coupling terminal unit comes into contact with a connection terminal unit and a connection body terminal unit, are arranged in zigzags, thereby achieving correct contact between the coupling terminal unit and the connection terminal unit and between the coupling terminal unit and the connection body terminal unit.

It is another object of the present invention to provide a connection terminal wherein insertion force necessary to insert a connection terminal unit into a coupling terminal unit is minimized.

It is a further object of the present invention to provide a connection terminal wherein a contact point is formed at a coupling terminal unit, and another contact point is formed at a connection body terminal unit, thereby achieving contact between the coupling terminal unit and the connection body terminal unit at the two contact points.

### Technical Solution

In accordance with the present invention, the above and other objects can be accomplished by the provision of a connector terminal including a coupling terminal unit for electrically connecting a connection terminal unit, which is inserted into the coupling terminal unit from a front part thereof, and a connection body terminal unit, which is inserted into the coupling terminal unit from a rear part thereof, to each other, the coupling terminal unit including upper and lower coupling terminal parts arranged in a symmetrical fashion, wherein each of the upper and lower coupling terminal parts of the coupling terminal unit is provided at one side thereof with a fixed end, each of the upper and lower coupling terminal parts of the coupling terminal unit is provided at the other side thereof with a free end which is movable, and each of the upper and lower coupling terminal parts of the coupling terminal unit is provided with a bent portion formed at the front part of each of the upper and lower coupling terminal parts between the fixed end and the free end, wherein the connection body terminal unit is inserted into a space formed between the fixed end and the free end, and wherein contact is achieved between the free end of each of the upper and lower coupling terminal parts of the coupling terminal unit and the connection terminal unit at two or more contact points, and contact is achieved between the free end of each of the upper and lower coupling terminal parts of the coupling terminal unit and the connection body terminal unit at two or more contact points, characterized in that front contact points are formed at front ends of the connection body terminal unit, which are inserted into the spaces defined between the fixed ends and the free ends of the coupling terminal parts, such that the front contact points protrude inwardly towards the free ends of the coupling terminal parts to come into contact with surfaces of the coupling terminal parts adjacent to the bent portions and at the sides of the coupling terminal parts with the free ends.

The two or more contact points may include at least two inside contact points formed at each of the upper and lower coupling terminal parts of the coupling terminal unit such that the at least two inside contact points protrude inward of the coupling terminal unit so as to come into contact with the connection terminal unit, at least one outside contact point formed at each of the upper and lower coupling terminal parts of the coupling terminal unit such that the at least one outside contact point protrudes outward of the coupling terminal unit so as to come into contact with the connection body terminal unit, the at least one outside contact point being located at a rear part of the free end of each of the upper and lower coupling terminal parts of the coupling terminal unit, and front contact points formed at front parts of the connection body terminal unit such that front contact points protrude toward the coupling terminal unit.

The two or more contact points may include at least two inside contact points formed at each of the upper and lower coupling terminal parts of the coupling terminal unit such that the at least two inside contact points protrude inward of the coupling terminal unit so as to come into contact with the connection terminal unit and at least two outside contact points formed at each of the upper and lower coupling terminal parts of the coupling terminal unit such that the at least two outside contact points protrude outward of the coupling terminal unit so as to come into contact with the connection body terminal unit.

The inside contact points and the outside contact points may be sequentially formed at the coupling terminal unit from a front part of the coupling terminal unit through which the connection terminal unit is inserted into the coupling terminal unit.

The distance between the inside contact points of the upper and lower coupling terminal parts of the coupling terminal unit positioned at front parts thereof may be equal to the distance between the inside contact points of the upper and lower coupling terminal parts of the coupling terminal unit positioned at rear parts thereof.

### Advantageous Effects

According to the present invention, contact is achieved between each of the upper and lower coupling terminal parts of the coupling terminal unit and the connection terminal unit at two or more contact points. Therefore, the present invention has the effect of effectively dispersing heat generated from the contact points during electrical connection between the coupling terminal unit and the connection terminal unit. In the same manner, contact is achieved between each of the upper and lower coupling terminal parts of the coupling terminal unit and the connection body terminal unit at two or more contact points. Therefore, the present invention has the effect of effectively dispersing heat generated from the contact points during electrical connection between the coupling terminal unit and the connection body terminal unit.

As described above, heat generated from the contact points is dispersed. Therefore, the present invention has the effect of preventing sparking at the contact points due to excessive heat generation, thereby eliminating a risk of explosion.

Also, the distance between the inside contact points of the upper and lower coupling terminal parts of the coupling terminal unit positioned at the front parts thereof is equal to the distance between the inside contact points of the upper and lower coupling terminal parts of the coupling terminal unit positioned at the rear parts thereof. Therefore, the present invention has the effect of minimizing insertion force necessary to insert the connection terminal unit into the coupling terminal unit.

### Brief Description of Drawings

The above and other objects, features and other advantages of the present invention will be more clearly understood from the following detailed description taken in conjunction with the accompanying drawings, in which:
FIG. 1 is a perspective view illustrating a connector terminal according to the present invention;
FIG. 2 is a partial view illustrating an embodiment of the connector terminal according to the present invention;
FIGS. 3, 4, and 5 are sequential views illustrating electrical connection between a coupling terminal unit and a connection terminal unit and between the coupling terminal unit and a connection body terminal unit of a connector terminal not falling within the scope of the present invention;
FIG. 6 is a partial view illustrating an embodiment of the connector terminal according to the present invention; and
FIG. 7 is a view illustrating electrical connection between a coupling terminal unit and a connection terminal unit and between the coupling terminal unit and a connection body terminal unit of the connector terminal according to the present invention shown in FIG. 6.

### Best Mode for Carrying out the Invention

Now, preferred embodiments of the present invention will be described in detail with reference to the accompanying drawings. In the following, a detailed description of known functions and configurations incorporated herein will be omitted when it may make the subject matter of the present invention rather unclear.

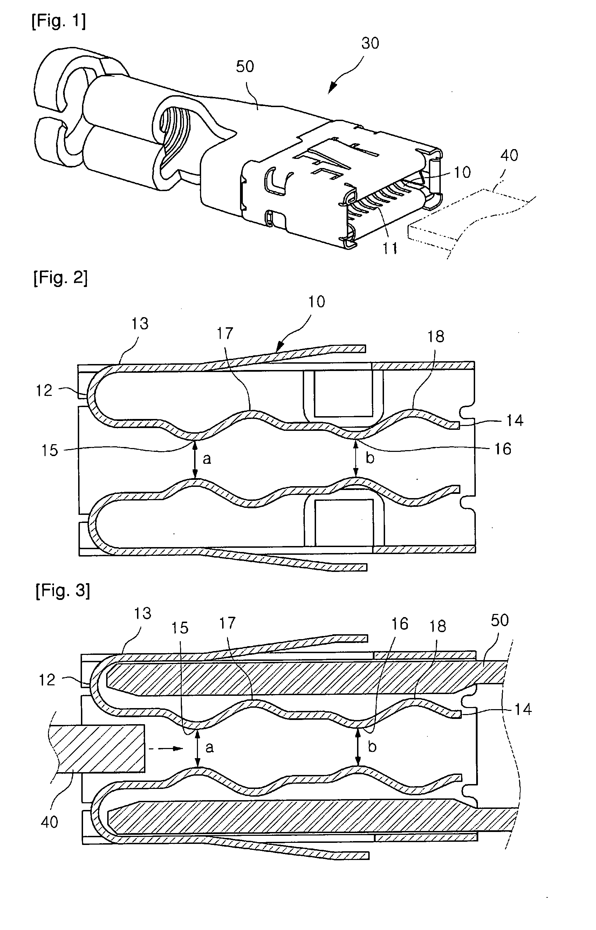

FIG. 1 is a perspective view illustrating a connector terminal according to the present invention, and FIG. 2 is a partial view illustrating an embodiment of the connector terminal according to the present invention.

As shown in FIG. 1, a connector terminal 30 is configured such that a connection body terminal unit 50 is inserted into one side of a coupling terminal unit 10, which is formed in the shape of a pipe open at opposite ends thereof and a connection terminal unit 40 is inserted into the other side of the coupling terminal unit 10 so as to form contact points 15, 16, 17, and 18, and the connection body terminal unit 50 and the connection terminal unit 40 are electrically connected to each other via the coupling terminal unit 10.

Referring to FIG. 2, the coupling terminal unit 10 includes an upper coupling terminal part and a lower coupling terminal part, each of which is made of a metal member. As previously described, the coupling terminal unit 10 is formed in the shape of a pipe open at opposite ends thereof. Each of the upper and lower coupling terminal parts of the coupling terminal unit 10 is provided at the front part thereof with a fixed end 13 having a bent portion 12. Each of the upper and lower coupling terminal parts of the coupling terminal unit 10 is provided at the rear part thereof with a free end 14 which is movable. The upper and lower coupling terminal parts of the coupling terminal unit 10 are arranged in a symmetrical fashion.

More specifically, each of the upper and lower coupling terminal parts of the coupling terminal unit 10 is made of a single metal member. The metal member is bent about the bent portion 12 formed at the front part of each of the upper and lower coupling terminal parts of the coupling terminal unit 10, with the result that the fixed end 13 and the free end 14 are formed while the fixed end 13 and the free end 14 are spaced apart from each other by a predetermined distance corresponding to the bent angle.

Preferably, the free end 14 of each of the upper and lower coupling terminal parts of the coupling terminal unit 10 is provided with a plurality of slit-shaped grooves 11, by which the coupling terminal unit 10 exhibits elasticity.

The free end 14 of each of the upper and lower coupling terminal parts of the coupling terminal unit 10 has first and second inside contact points 15 and 16 protruding to the inside of the coupling terminal unit 10 and first and second outside contact points 17 and 18 protruding to the outside of the coupling terminal unit 10.

Preferably, the first and second inside contact points 15 and 16 and the first and second outside contact points 17 and 18 are arranged in zigzags.

In other words, the first inside contact point 15 is formed at the free end 14 adjacent to the bent portion 12, and then the first outside contact point 17, the second inside contact point 16, and the second outside contact point 18 are sequentially formed at the free end 14.

Preferably, at the first inside contact points 15 and the second inside contact points 16 formed at the upper and lower coupling terminal parts of the coupling terminal unit 10, respectively, such that the first inside contact points 15 and the second inside contact points 16 can come into contact with upper and lower sides of the connection terminal unit 40, the distance a between the first inside contact points 15 of the upper and lower coupling terminal parts of the coupling terminal unit 10 positioned at the front parts of the respective free ends 14 is equal to the distance b between the second inside contact points 16 of the upper and lower coupling terminal parts of the coupling terminal unit 10 positioned at the rear parts of the respective free ends 14.

If the distance b between the second inside contact points 16 is greater than the distance a between the first inside contact points 15, contact between the connection terminal unit 40 and the second inside contact points 16 of the coupling terminal unit 10 may not be achieved when the connection terminal unit 40 is inserted into the coupling terminal unit 10.

On the other hand, if the distance b between the second inside contact points 16 is less than the distance a between the first inside contact points 15, a greater insertion force is necessary to insert the connection terminal unit 40 through a space defined between the first inside contact points 15 than to insert the connection terminal unit 40 through a space defined between the second inside contact points 16 when the connection terminal unit 40 is inserted into the coupling terminal unit 10. Consequently, the connection terminal unit 40 is forcibly inserted into the coupling terminal unit 10 and forcibly removed from the coupling terminal unit 10, which requires greater force. In addition, when the forcible insertion of the connection terminal unit 40 into the coupling terminal unit 10 is repeatedly performed, elastic force of the free ends 14 of the upper and lower coupling terminal parts of the coupling terminal unit 10 at which the second inside contact points 16 are formed is gradually decreased, with the result that contact between the connection terminal unit 40 and the second inside contact points 16 of the coupling terminal unit 10 may not be achieved.

The coupling terminal unit 10 with the above-stated construction electrically connects the connection body terminal unit 50, which is positioned at the free ends 14 of the coupling terminal unit 10 and front ends of which are inserted into spaces defined between the fixed ends 13 and the corresponding free ends 14 of the coupling terminal unit 10, and the connection terminal unit 40, which is inserted into the coupling terminal unit 10 through a space defined between the bent portions 12 of the coupling terminal unit 10, via the above-described contact points of the coupling terminal unit 10.

Contact is preferably achieved between each of the upper and lower coupling terminal parts of the coupling terminal unit 10 and the connection terminal unit 40 at two or more contact points so as to disperse heat generated during electrical connection between the coupling terminal unit 10 and the connection terminal unit 40. In the same manner, contact is preferably achieved between each of the upper and lower coupling terminal parts of the coupling terminal unit 10 and the connection body terminal unit 50 at two or more contact points so as to disperse heat generated during electrical connection between the coupling terminal unit 10 and the connection body terminal unit 50.

FIGS. 3, 4, and 5 are sequential views illustrating electrical connection between the coupling terminal unit and the connection terminal unit and between coupling terminal unit and the connection body terminal unit of a connector terminal not falling within the scope of the present invention.

Referring first to FIG. 3, the connection body terminal unit 50 is inserted into the spaces defined between the fixed ends 13 and the corresponding free ends 14 of the coupling terminal unit 10 with the above-stated construction.

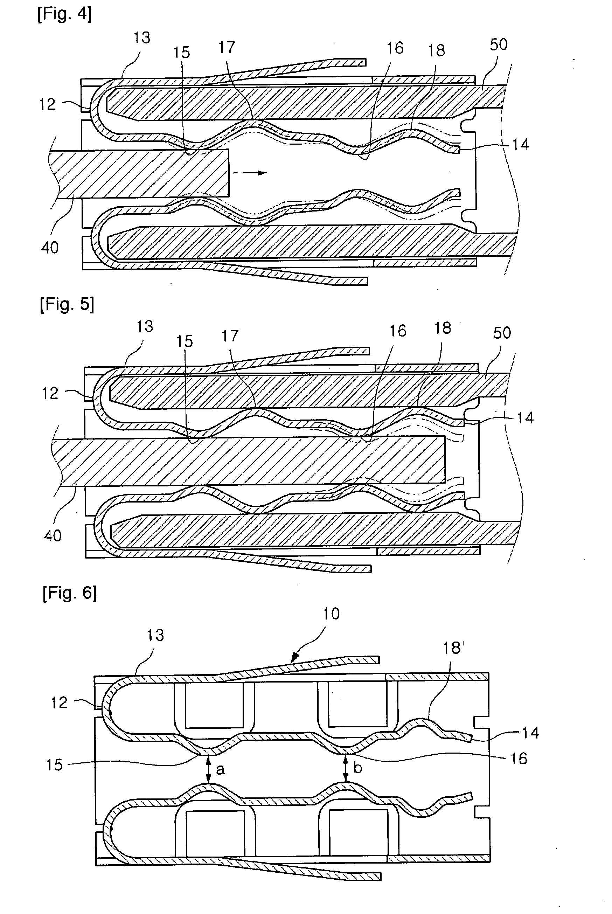

Subsequently, the connection terminal unit 40 is inserted into the coupling terminal unit 10 through the space defined between the bent portions 12 of the coupling terminal unit 10. As a result, as shown in FIG. 4, the connection terminal unit 40 comes into contact with the first inside contact points 15 of the coupling terminal unit 10. At this time, the connection terminal unit 40 pushes the first inside contact points 15 of the coupling terminal unit 10 outward, with the result that the first outside contact points 17 of the coupling terminal unit 10 come into contact with the connection body terminal unit 50.

When the first inside contact points 15 and the first outside contact points 17 of the coupling terminal unit 10 come into contact with the connection terminal unit 40 and the connection body terminal unit 50, respectively, the free ends 14 of the coupling terminal unit 10, which exhibit elasticity and mobility due to slit-shaped grooves 11, are deformed by repulsive force generated when the first outside contact points 17 of the coupling terminal unit 10 are pushed by the connection terminal unit 40, with the result that the free ends 14 of the coupling terminal unit 10 are pushed inward.

For easy description, the operation of the upper connection terminal part of the connection terminal unit 10 will be described in detail as an example. When the connection terminal unit 40 comes into contact with the first inside contact point 15, the connection terminal unit 40 pushes the first inside contact point 15 upward, with the result that the first outside contact point 17 of the coupling terminal unit 10 comes into contact with the connection body terminal unit 50. Repulsive force is generated from the first outside contact point 17 of the coupling terminal unit 10 which is pushed upward and comes into contact with the connection body terminal unit 50, and the repulsive force pushes the second inside contact point 16 and the second outside contact point 18 downward.

Referring now to FIG. 5, the connection terminal unit 40 comes into contact with the second inside contact points 16 of the coupling terminal unit 10 as the connection terminal unit 40 is further inserted into the coupling terminal unit 10.

At this time, the second outside contact points 18 of the coupling terminal unit 10 are pushed outward, with the result that the second outside contact points 18 of the coupling terminal unit 10 come into contact with the connection body terminal unit 50.

As described above, the coupling terminal unit 10 is electrically connected to the connection terminal unit 40 and the connection body terminal unit 50 at the first and second inside contact points 15 and 16 and at the first and second outside contact points 17 and 18, respectively. As a result, heat generated during electrical connection between the coupling terminal unit 10 and the connection terminal unit 40 is dispersed through the two contact points between the coupling terminal unit 10 and the connection terminal unit 40. In the same manner, heat generated during electrical connection between the coupling terminal unit 10 and the connection body terminal unit 50 is dispersed through the two contact points between the coupling terminal unit 10 and connection body terminal unit 50.

The number of the first and second inside contact points 15 and 16 and the number of the first and second outside contact points 17 and 18 may be increased based on an amount of heat generated during electrical connection between the coupling terminal unit 10 and the connection terminal unit 40 and between the coupling terminal unit 10 and connection body terminal unit 50.

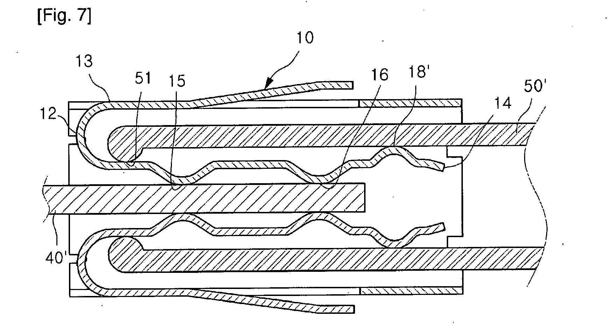

FIG. 6 is a partial view illustrating an embodiment of the connector terminal according to the present invention, and FIG. 7 is a view illustrating electrical connection between a coupling terminal unit and a connection terminal unit and between the coupling terminal unit and a connection body terminal unit of the connector terminal according to the present invention shown in FIG. 6.

As shown in FIG. 6, the connector terminal of this embodiment is different from the connector terminal of the previous embodiment in that first and second inside contact points 15 and 16 are formed at a free end 14 of each coupling terminal part of a coupling terminal unit 10 in the same manner as in the previous embodiment, but a single outside contact point 18' is formed at the free end 14 of each coupling terminal part of the coupling terminal unit 10 such that the single outside contact point 18' comes into contact with a connection body terminal unit 50'. Also, front contact points 51 are formed at front ends of the connection body terminal unit 50', which are inserted into spaces defined between fixed ends 13 and the free ends 14 of the coupling terminal unit 10, such that the front contact points 51 protrude inward of the coupling terminal unit 10 (see FIG. 7).

The distance a between the first inside contact points 15 of the upper and lower coupling terminal parts of the coupling terminal unit 10 is equal to the distance b between the second inside contact points 16 of the upper and lower coupling terminal parts of the coupling terminal unit 10.

Referring to FIG. 7, the connection body terminal unit 50' is inserted into the spaces defined between the fixed ends 13 and the corresponding free ends 14 of the coupling terminal unit 10.

At this time, the front contact points 51, which are formed at the front ends of the connection body terminal unit 50' such that the front contact points 51 protrude inward of the coupling terminal unit 10, come into contact with surfaces adjacent to bent portions 12 of the coupling terminal unit 10. In addition, rear ends of the connection body terminal unit 50' come into contact with the outside contact points 18' formed at the free ends 14 of the coupling terminal unit 10 such that the outside contact points 18' protrude outward of the coupling terminal unit 10. Therefore, contact is achieved between each of the upper and lower coupling terminal parts of the coupling terminal unit 10 and the connection body terminal unit 50' at two or more contact points.

Also, a connection terminal unit 40' is inserted into the coupling terminal unit 10 through a space defined between the bent portions 12 of the coupling terminal unit 10. At this time, the connection terminal unit 40' comes into contact with the first and second inside contact points 15 and 16 formed at each of the upper and lower coupling terminal parts of the coupling terminal unit 10. Therefore, contact is achieved between each of the upper and lower coupling terminal parts of the coupling terminal unit 10 and the connection terminal unit 40' at two or more contact points.

As a result, the connection terminal unit 40' and the connection body terminal unit 50' are electrically connected to each other via the coupling terminal unit 10 such that contact is achieved between each of the upper and lower coupling terminal parts of the coupling terminal unit 10 and the connection terminal unit 40' at two or more contact points and contact is achieved between each of the upper and lower coupling terminal parts of the coupling terminal unit 10 and the connection body terminal unit 50' at two or more contact points.

### Mode for the Invention

Various embodiments have been described in the best mode for carrying out the invention.

### Industrial Applicability

According to the present invention, contact is achieved between each of the upper and lower coupling terminal parts of the coupling terminal unit and the connection terminal unit at two or more contact points. Therefore, the present invention has the effect of effectively dispersing heat generated from the contact points during electrical connection between the coupling terminal unit and the connection terminal unit. In the same manner, contact is achieved between each of the upper and lower coupling terminal parts of the coupling terminal unit and the connection body terminal unit at two or more contact points. Therefore, the present invention has the effect of effectively dispersing heat generated from the contact points during electrical connection between the coupling terminal unit and the connection body terminal unit.

As described above, heat generated from the contact points is dispersed. Therefore, the present invention has the effect of preventing sparking at the contact points due to excessive heat generation, thereby eliminating a risk of explosion.

Also, the distance between the inside contact points of the upper and lower coupling terminal parts of the coupling terminal unit positioned at the front parts thereof is equal to the distance between the inside contact points of the upper and lower coupling terminal parts of the coupling terminal unit positioned at the rear parts thereof. Therefore, the present invention has the effect of minimizing insertion force necessary to insert the connection terminal unit into the coupling terminal unit.

Consequently, the present invention has industrial applicability.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A connector terminal (30) comprising a coupling terminal unit (10) for electrically connecting a connection terminal unit (40), which is inserted into the coupling terminal unit (10) from a front part thereof, and a connection body terminal unit (50'), which is inserted into the coupling terminal unit (10) from a rear part thereof, to each other, the coupling terminal unit (10) comprising upper and lower coupling terminal parts arranged in a symmetrical fashion, wherein each of the upper and lower coupling terminal parts of the coupling terminal unit (10) is provided at one side thereof with a fixed end (13), each of the upper and lower coupling terminal parts of the coupling terminal unit (10) is provided at the other side thereof with a free end (14) which is movable, and each of the upper and lower coupling terminal parts of the coupling terminal unit (10) is provided with a bent portion (12) formed at the front part of each of the upper and lower coupling terminal parts between the fixed end (13) and the free end (14), wherein the connection body terminal unit (50') is inserted into a space formed between the fixed end (13) and the free end (14), and wherein contact is achieved between the free end (14) of each of the upper and lower coupling terminal parts of the coupling terminal unit (10) and the connection terminal unit (40') at two or more contact points (15, 16), and contact is achieved between the free end (14) of each of the upper and lower coupling terminal parts of the coupling terminal unit (10) and the connection body terminal unit (50') at two or more contact points (18, 51), **characterized in that** front contact points (51) are formed at front ends of the connection body terminal unit (50'), which are inserted into the spaces defined between the fixed ends (13) and the free ends (14) of the coupling terminal parts, such that the front contact points (51) protrude inwardly towards the free ends (14) of the coupling terminal parts to come into contact with surfaces of the coupling terminal parts adjacent to the bent portions (12) and at the sides of the coupling terminal parts with the free ends (14).

2. The connector terminal (30) according to claim 1, wherein the two or more contact points (15, 16, 18, 51) comprise:
at least two inside contact points (15, 16) formed at each of the upper and lower coupling terminal parts of the coupling terminal unit (10) such that the at least two inside contact points (15, 16) protrude inward of the coupling terminal unit (10) so as to come into contact with the connection terminal unit (40'); at least one outside contact point (18) formed at each of the upper and lower coupling terminal parts of the coupling terminal unit (10) such that the at least one outside contact point (18) protrudes outward of the coupling terminal unit (10) so as to come into contact with the connection body terminal unit (50'), the at least one outside contact point (18) being located at a rear part of the free end (14) of each of the upper and lower coupling terminal parts of the coupling terminal unit (10); and
said front contact points (51).

3. The connector terminal (30) according to claim 1 or 2, wherein a distance (a) between the inside contact points (15) of the upper and lower coupling terminal parts of the coupling terminal unit (10) positioned at front parts thereof is equal to a distance (b) between the inside contact points (16) of the upper and lower coupling terminal parts of the coupling terminal unit (10) positioned at rear parts thereof.

## Patentansprüche

1. Steckerklemme (30) umfassend eine Anschlusssteckereinheit (10) zum elektrischen Verbinden einer Verbindungssteckereinheit (40), die in der Anschlusssteckereinheit (10) von einem Vorderteil her derselben eingesetzt ist, und einer Verbindungskörpersteckereinheit (50'), die in die Anschlusssteckereinheit (10) von einem hinteren Teil her derselben eingesetzt ist, wobei die Anschlusssteckereinheit (10) obere und untere Anschlusssteckerteile umfasst, die symmetrisch angeordnet sind, wobei jeder der oberen und unteren Anschlusssteckerteile der Anschlusssteckereinheit (10) auf einer seiner Seiten mit einem festen Ende (13) versehen ist, wobei jedes der oberen und unteren Anschlusssteckerteile der Anschlusssteckereinheit (10) auf der anderen ihrer Seiten mit einem freien beweglichen Ende (14) versehen ist, und jedes der oberen und unteren Anschlusssteckerteile der Anschlusssteckereinheit (10) einen gebogenen Abschnitt (12) aufweist, der auf dem vorderen Teil jedes der oberen und unteren Anschlusssteckerteile zwischen dem festen Ende (13) und dem freien Ende (14), geformt ist, wobei die Verbindungskörpersteckereinheit (50') in einen Raum eingesetzt ist, der zwischen dem festen Ende (13) und dem freien Ende (14) gebildet ist, und wobei ein Kontakt zwischen dem freien Ende (14) jedes der oberen und unteren Anschlusssteckerteile der Anschlusssteckereinheit (10) und der Verbindungssteckereinheit (40') an zwei oder mehr Kontaktstellen (15, 16) erhalten wird, und wobei ein Kontakt zwischen dem freien Ende (14) jedes der oberen und unteren Anschlusssteckerteile der Anschlusssteckereinheit (10) und der Verbindungskörpersteckereinheit (50') an zwei oder mehr Kontaktstellen (18, 51) erhalten wird, **dadurch gekennzeichnet dass** vordere Kontaktstellen (51) auf vorderen Enden der Verbindungskörpersteckereinheit (50') gebildet werden, die in den zwischen den festen Enden (13) und den freien Enden (14) der Anschlusssteckerteile definierten Räumen eingesetzt werden, sodass die vorderen Kontaktstellen (51) nach innen, in Richtung der freien Enden (14) der Anschlusssteckerteile, überstehen sodass sie mit Oberflächen der Anschlusssteckerteile, welche an die gebogenen Bereiche (12) angrenzen, und mit den freien Enden (14) auf den Seiten der Anschlusssteckerteile in Kontakt kommen.

2. Steckerklemme (30) nach Anspruch 1, wobei die zwei oder mehr Kontaktstellen (15, 16, 18, 51) folgendes umfassen:
zumindest zwei innere Kontaktstellen (15, 16), die auf jedem der oberen und unteren Anschlusssteckerteile der Anschlusssteckereinheit (10) angeformt sind, sodass die zumindest zwei inneren Kontaktstellen (15, 16) nach innen zu der Anschlusssteckereinheit (10) hin vorstehen sodass sie mit der Verbindungssteckereinheit (40') in Kontakt treten; zumindest eine äußere Kontaktstelle (18), die auf jedem der oberen und unteren Anschlusssteckerteile der Anschlusssteckereinheit (10) angeformt ist, sodass die zumindest eine äußere Kontaktstelle (18) aus der Anschlusssteckereinheit (10) vorsteht, sodass sie mit der Verbindungskörpersteckereinheit (50') in Kontakt kommt, wobei die zumindest eine äußere Kontaktstelle (18) in einem hinteren Bereich des freien Endes (14) jedes der oberen und unteren Anschlusssteckerteile der Anschlusssteckereinheit (10) angeordnet ist; und
die vorderen Kontaktstellen (51).

3. Steckerklemme (30) nach Anspruch 1 oder 2, wobei ein Abstand (a) zwischen den inneren Kontaktstellen (15) der oberen und unteren Anschlusssteckerteile der Anschlusssteckereinheit (10), die auf vorderen Teilen derselben angeordnet sind, einem Abstand (b) zwischen den inneren Kontaktstellen (16) der oberen und unteren Anschlusssteckerteilen der Anschlusssteckereinheit (10), die auf hinteren Teilen derselben angeordnet sind, gleich ist.

## Revendications

1. Borne de connecteur (30) comprenant une unité de borne d'accouplement (10) pour connecter électriquement une unité de borne de connexion (40), qui est insérée dans l'unité de borne d'accouplement (10) à partir d'une partie avant de celle-ci, et une unité de borne de corps de connexion (50'), qui est insérée dans l'unité de borne d'accouplement (10) à partir d'une partie arrière de celle-ci, l'une à l'autre, l'unité de borne d'accouplement (10) comprenant des parties de borne d'accouplement supérieure et inférieure agencées de façon symétrique, dans laquelle chacune des parties de borne d'accouplement supérieure et inférieure de l'unité de borne d'accouplement (10) est pourvue d'un côté de celle-ci d'une extrémité fixe (13), chacune des parties de borne d'accouplement supérieure et inférieure de l'unité de borne d'accouplement (10) est pourvue de l'autre côté de celle-ci d'une extrémité libre (14) qui peut être déplacée, et chacune des parties de borne d'accouplement supérieure et inférieure de l'unité de borne d'accouplement (10) est pourvue d'une partie cintrée (12) formée au niveau de la partie avant de chacune des parties de borne d'accouplement supérieure et inférieure entre l'extrémité fixe (13) et l'extrémité libre (14), dans laquelle l'unité de borne de corps de connexion (50') est insérée dans un espace formé entre l'extrémité fixe (13) et l'extrémité libre (14), et dans laquelle un contact est obtenu entre l'extrémité libre (14) de chacune des parties de borne d'accouplement supérieure et inférieure de l'unité de borne d'accouplement (10) et l'unité de borne de connexion (40') au niveau de deux points de contact (15, 16) ou plus, et un contact est obtenu entre l'extrémité libre (14) de chacune des parties de borne d'accouplement supérieure et inférieure de l'unité de borne d'accouplement (10) et l'unité de borne de corps de connexion (50') au niveau de deux points de contact (18, 51) ou plus, **caractérisée en ce que** les points de contact avant (51) sont formés au niveau des extrémités avant de l'unité de borne de corps de connexion (50'), qui sont insérées dans les espaces définis entre les extrémités fixes (13) et les extrémités libres (14) des parties de borne d'accouplement, de sorte que les points de contact avant (51) font saillie vers l'intérieur vers les extrémités libres (14) des parties de borne d'accouplement pour venir en contact avec les surfaces des parties de borne d'accouplement adjacentes aux parties cintrées (12) et au niveau des côtés des parties de borne d'accouplement avec les extrémités libres (14).

2. Borne de connecteur (30) selon la revendication 1, dans laquelle les deux points de contact ou plus (15, 16, 18, 51) comprennent :
au moins deux points de contact intérieurs (15, 16) formés au niveau de chacune des parties de borne d'accouplement supérieure et inférieure de l'unité de borne d'accouplement (10) de sorte que lesdits au moins deux points de contact intérieurs (15, 16) font saillie vers l'intérieur de l'unité de borne d'accouplement (10) de manière à venir en contact avec l'unité de borne de connexion (40') ; au moins un point de contact extérieur (18) formé au niveau de chacune des parties de borne d'accouplement supérieure et inférieure de l'unité de borne d'accouplement (10) de sorte que ledit au moins un point de contact extérieur (18) fait saillie à l'extérieur de l'unité de borne d'accouplement (10) de manière à venir en contact avec l'unité de borne de corps de connexion (50'), ledit au moins un point de contact extérieur (18) étant situé au niveau d'une partie arrière de l'extrémité libre (14) de chacune des parties de borne d'accouplement supérieure et inférieure de l'unité de borne d'accouplement (10) ; et
lesdits points de contact avant (51).

3. Borne de connecteur (30) selon la revendication 1 ou 2, dans laquelle une distance (A) entre les points de contact intérieurs (15) des parties de borne d'accouplement supérieure et inférieure de l'unité de borne d'accouplement (10) positionnés au niveau des parties avant de celles-ci est égale à une distance (b) entre les points de contact intérieurs (16) des parties de borne d'accouplement supérieure et inférieure de l'unité de borne d'accouplement (10) positionnés au niveau des parties arrière de celles-ci.
